# EUROPEAN PATENT SPECIFICATION

(11) **EP 1 168 754 B1**
(45) Date of publication and mention of the grant of the patent: **16.03.2005**
(21) Application number: 00440191.5
(22) Date of filing: 26.06.2000
(51) Int. Cl.: H04L 29/06, H04Q 7/22

(54) **Addressing scheme to be used in an IP-based radio access network**
Adressierungsschema für ein IP basiertes funkzugriffsnetz
Systéme d'adressage pour un réseau d'acces radio à protocole IP

(43) Date of publication of application: 02.01.2002
(73) Proprietor: ALCATEL, 75008 Paris (FR)
(72) Inventor: Emanuel, Frank, 70193 Stuttgart (DE); Barth, Ulrich, 70825 Münchingen (DE); Gassner, Martin, 74385 Pleidelsheim (DE)
(74) Representative: Rausch, Gabriele, Dr.

(56) References cited:
- WO-A-99/01991
- US-A- 5 978 368
- SRINIVASAN V ET AL: "Fast and scalable layer four switching" COMPUTER COMMUNICATIONS REVIEW,US,ASSOCIATION FOR COMPUTING MACHINERY. NEW YORK, vol. 28, no. 4, 2 September 1998 (1998-09-02), pages 191-202, XP002107832 ISSN: 0146-4833

## Description

The present invention relates to radio communication systems and more particularly to an addressing scheme to be used in an IP-Based Radio Access Network.

In an usual radio communication network, a radio terminal has access, over a radio interface, to a Radio Access Network which is the dedicated infrastructure to set up and control connections between the radio terminal and different other possible end-users, for example another radio terminal, a fixed terminal, or a web server.

A Radio Access Network is mainly composed of base stations and of their controller. End-user data and connection-control data are conveyed over the Radio Access Network between these network elements.

In the case of usual GSM mobile radio communication networks, the Radio Access Network is tailored to the GSM standard with for example permanent connections between a base station and its controller.

In third generation radio communication networks, as UMTS for example, it proves more appropriate to use a de-facto standard network (e.g. an ATM or IP network) as underlying transport capability in the Radio Access Network instead of a Radio Access Network specifically tailored for the radio communication network. This enable to reuse the recent enhancements in term of performance and quality of service that have been achieved and keep being improved in the field of IP or ATM transport. To adapt these de-facto standard networks to the specific requirements of a Radio Access Network, specific layers have to be implemented above the IP or ATM transport layers.

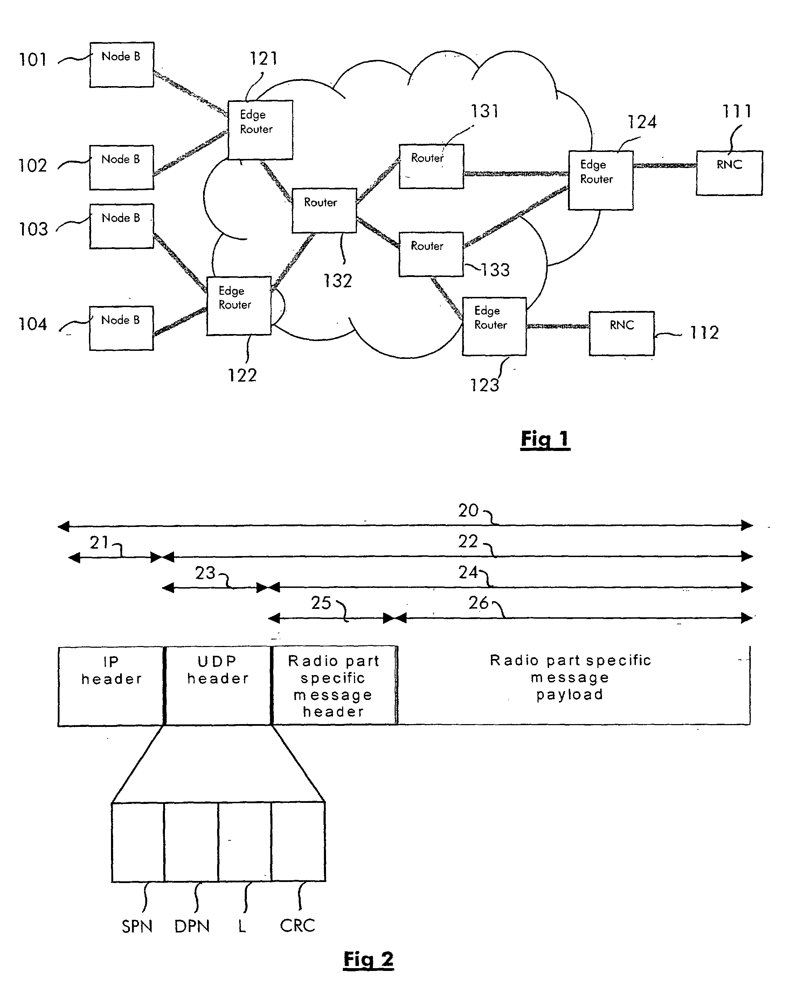

Figure 1 represents an example of an IP Backbone network used as transport layer of a Radio Access Network in an UMTS radio communication network. Base stations in an UMTS radio communication network are called Node Bs and base station controllers are called Radio Network Controller RNCs. Several base stations 101, ..., 104 as well as several RNCs 111, 112 are considered as hosts of the IP-based Radio Access Network and are connected to each other over interconnected edge routers 121, ..., 124 and core routers 131, ..., 133. The interconnection of edge 121, ..., 124 and core 131, ..., 133 routers constitutes the IP backbone.

The most important task of the Radio Access Network consists in enabling communications between a base station and its corresponding RNC (luB interface) as well as communication between several RNCs (lur interface). In an IP-based Radio access network, these communications can made up of several hops, several edge routers or core routers relaying the communication between two hosts.

In such an IP-based Radio Access Network, the physical links between the different routers can mix several technologies. Transport functions, like addressing and routing, are made according to IP de-facto standard. All elements of the Radio Access Network (e.g. base stations 101, ..., 104, RNCs 111, 112, routers 121, ..., 124 and 131, ..., 133) are assigned an IP address and can be addressed univocally with this IP address. The IP layer of the IP-based protocol stack is responsible for transferring data between hosts.

A protocol layer, set above the IP layer, is responsible for differentiating among multiple data sources and destinations within one single host. These different sources or destinations may be different concurrent applications. This is required by parallel processing and multitasking performed at base stations or base station controllers having a high processing power.

An example of such a layer in the IP-based protocol stack is UDP (User Datagram Protocol), another example could be TCP (Transmission Control Protocol). UDP or TCP provide both two services not provided by the IP layer. They provide port numbers to help distinguish different sources and destinations inside a single host and, optionally, a checksum capability to verify that the data arrived intact.

In the Open Systems Interconnection (OSI) communication model, IP correspond to layer 3, the network layer. UDP, like TCP, is in layer 4, the Transport Layer. The User Datagram Protocol is specified by Internet Engineering Task Force (Request for Comments 768).

Prior art document WO 99/01991 discloses a system to determine a Radio Access Network bearer service that best corresponds to the actual needs of a specific TCP/UDP/IP application using a well-known port number.

This invention concerns the adaptation of an IP-based Radio Access Network to specific requirements of a radio communication network. One of these specific requirements is that the pure radio part of the radio communication network is not supported by usual IP de-facto standards.

The radio part of a radio communication network supports for example different channel types. A first category of these channel types is dedicated channels (e.g. dedicated traffic channels DTC) which are attributed to exclusively one communication. Another category of radio channel types is common channels. These radio channels multiplex data belonging to several connections or data shared by several connections. Examples of common channel types are random access channel (RACH) or broadcast channel (BCH). This is not an exhaustive list of all possible channel types. The complete list of different channel types is radio communication network dependant and is described in the radio interface specification of each radio communication channel.

The possibility to distinguish between several channel types is not given in the IP de-facto standard. A protocol conversion has to be implemented between the IP-based Radio Access Network and the radio part of the radio communication network to remedy to this problem and ensure the interworking between the IP-based Radio Access Network and the radio part of the radio communication network. This protocol translation takes preferably place at the edge of the Radio Access Network (e.g. in the base stations or in the base station controller).

A method for solving this problem has already be provided in ATM-based Radio Access Networks and consists in using the signaling plane specified in the ATM de facto standard to convey the radio part specific parameters. The user data are in parallel conveyed through a connection established between the base station and the RNC. However, contrary to ATM, basically connection oriented, IP is basically connectionless and do not provide any signaling plane.

As a consequence, each additional communication parameter has to be conveyed by adding a field in the payload of IP packets exchanged in the IP-based Radio Access Network. This further field containing the further communication parameter (e.g. the type of channel on which this information has to be mapped on the radio part of the network) is possibly part of the header of a communication entity encapsulated in the UDP packet.

A drawback of this method would be to add overhead and slower the transmission as well as the processing delay. This is all the more problematic as keeping the delays, while crossing the network, as small as possible is vital for ensuring an acceptable quality of service. This method has also the disadvantage to reduce the data throughput at the interface between the Radio Access Network and the radio interface.

A particular object of the present invention is to provide an addressing scheme that do not require a separate signaling plane for signaling the type of radio channel on which data destined to a radio terminal have to be transported on the radio interface.

Another object of the present invention is to save the use of a further a field for explicitly specifying the radio channel type to be used for transmitting the corresponding data over the air interface.

These objects, and others that appear below, are achieved by an addressing scheme to be used in an IP-based Radio Access Network, the Radio Access Network comprising a plurality of base stations and at least one base station controller, all communicating with each other by using an TCP/IP-or UDP/IP-based protocol stack, each base station being dedicated to communicate with a plurality of radio terminals having access to the Radio Access Network over at least two different types of radio channels. The addressing scheme consists in that the type of radio channel over which the base station communicates with one of the radio terminals is implicitly and univocally determined by a port number mentioned in each TCP or UDP data packet exchanged over the Radio Access Network and belonging to a communication with the radio terminal.

This method has the advantage to reduce the overhead necessary for the protocol translation between an IP-based Radio access network and the radio part of the communication network.

The present invention also concerns a base station according to claim 6 and a Radio Network Controller according to claim 8.

Other characteristics and advantages of the invention will appear on reading the following description of a preferred implementation given by way of non-limiting illustrations, and from the accompanying drawings, in which:
- Figure 1 shows a physical architecture of a IP-based Radio Access Network;
- Figure 2 shows the principle of the addressing scheme according to the present invention.

Figure 1 has already been described in relation with the technical problem underlying the present invention.

UDP will be preferred to TCP in the following as it better suits the delay requirements of a Radio Access Network than TCP. Unlike TCP, UDP does not provide the service of dividing a message into packets (datagrams) and reassembling it at the other end. Specifically, UDP doesn't provide retransmission of packets. These specific TCP features badly influence the end-to-end delay in the Radio Access Network.

However, the addressing scheme described above could also apply in an IP-based protocol stack using TCP since TCP as UDP use the concept of port numbers.

Figure 2 represents an IP packet exchanged in an IP-based Radio Access Network and illustrates the addressing scheme according to the invention. In the OSI communication model, the IP-based protocol stack relies on encapsulation of a communication unit belonging to a certain layer in a protocol unit belonging to the layer just beneath. IP packet 20 comprises an IP packet header 21 and an IP packet payload 22. The IP packet payload 22, in turn, encapsulates an UDP message consisting of an UDP header 23 and of a UDP payload 24. UDP payload 24 encapsulates a radio part specific message. The header 25 of this message comprises inter alia the reference of the end-user radio terminal to which, respectively from which, this message is destined, respectively received, and the payload 26 of this message contains the end-user data. The reference of the end-user radio terminal consists preferably on an address referencing the end-user radio terminal. This address is unique in the area of the base station to which the end-user radio terminal is attached.

The UPD header 23 is, as specified in the IETF standard, divided in four two bytes fields that specify following parameters:
- the port from which the UPD payload has been issued (source port number SPN);
- the port to which the UDP payload is destined (destination port number DPN);
- the UPD payload length L; and
- a UDP payload checksum CRC.

The destination port number is used to demultiplex correctly the IP packet and forward each UPD payload to the application corresponding to the destination port. Usually, the source and destination port are only internally used in a host (e.g. base station or RNC). A pool of port numbers are reserved for concurrent applications performing in parallel an identical task. In usual use of the UDP protocol, the port numbers are thus either randomly allocated to an application when it is activated or according to a round-robin algorithm.

This invention consists, contrary to the random port number allocation described above, in managing the pool of available port numbers in a way that each port number is no more only used for internal processing at the host but also conveys an indication regarding the radio channel type over which the data have to be transmitted, respectively the radio channel type from which the data were received. For this matter, the pool of port numbers is divided in several groups of port numbers, each group being exclusively used for processing data to be transmitted or received over one predefined type of radio channel.

The pool of port number as well as the assignment of one group of port numbers to one channel type may preferably be the same for each host in the Radio Access Network.

A first group of port number should be used for data to be transmitted over a first channel type after protocol translation at the base station. A second group is used for data to be transmitted over a second channel type and so on...

Each group should at least comprise one port number. As already mentioned, the exact number of channel types have to be extracted from the radio interface specification of the considered radio communication network.

The destination port number in the UDP header is used to make the association port number, channel type to be used on the radio interface. It could also be envisaged to use the source port number in the UDP header to make this association. A choice between the use of the one parameter or of the other parameter has to be made.

The dimensioning of the different groups should be done in such a manner that it balances and optimizes the load on each available port number. The mapping between available port numbers and corresponding channel types on the radio interface may be a system parameter initialized at initialization of the Radio Access Network so that each base station or RNC is informed of it.

This mapping may, in another embodiment, be dynamically updated according to the needs of the Radio Access Network and communicated to the base stations and the RNC once updated. An Operation and Management Center (OMC) part of the Radio Access Network may for example run statistics on the different traffic flows through the Radio Access Network and determine an optimal mapping between the port numbers and the radio channel types. This update may be done at constant time interval or according to any other update criterion known by a person skilled in the art.

The correspondence between port numbers and channel types may be physically stored in a memory location or a database accessible for the base stations and the RNCs of the Radio Access Network. This memory location may be centrally located in the network or distributed in the different hosts.

Except the base stations and the RNCs, the other elements of the Radio Access network (e.g. the edge and core routers) pass transparently the destination port number contained in the UDP header without modifying it.

In the following, the use of this addressing scheme in an host of the Radio Access Network (base station or RNC) will be discussed in detail.

A first part describes the use of the addressing scheme for data coming from the Radio Access Network at a base station and to be transmitted to a radio terminal over the radio interface. The base station identifies thanks to the UPD destination port number on which radio channel type the data have to be transmitted. A field in the UDP payload is also used to give the identifier of the end-user to which these data are destined. This identifier is unique for all end-user radio terminals belonging to one base station. The association of the end-user identifier and the UDP port determines univocally the destination of the message to be transmitted on the air interface.

The RNC is also responsible for protocol translation. It receives usually a call identifier from the rest of the radio communication network and has to translate it in a format specific to the Radio Access Network. As a consequence, the call identifier is translated in a triplet comprising the IP address of the base station, the UDP destination port number and the end-user identifier. These parameters as well as the user data are then used to constitute an IP-packet to be sent over the Radio Access Network.

A second part, describes the use of this addressing scheme for data received from a radio terminal at a base station and to be transmitted to the Radio Access Network. The base station detects the radio channel type on which these data have been received. It selects an available port number out of the memory location belonging to the group of port numbers assigned to the appropriate channel type. Then, the base station operates the protocol translation consisting in mapping the data format received from the radio channel to an IP packet. The destination port number field in the header of the encapsulated UDP packet is set to the value of the port number retrieved from the memory location. The radio part specific message encapsulated in the UDP packet contains in its header a field specifying an identifier of the end-user radio terminal at the origin of these data. This identifier in combination with the UDP port number is unique in the area of a given base station.

At base station, besides the pure protocol translation, shaping and multiplexing of several data flow may be done. As a consequence, the UDP packet may not only encapsulate one radio part specific message but a plurality of multiplexed radio part specific messages belonging to different users but having been received, respectively to be transmitted, on radio channels having the same channel type. Several multiplexed radio part specific messages are called a container. The shaping consists in segmenting each radio part specific message according, for example, to different level of priority assigned to the radio part specific message.

## Claims

1. Addressing method to be used in an IP-based Radio Access Network, said Radio Access Network comprising a plurality of base stations (101-104) and at least one base station controller (111) all communicating with each other by using an TCP/IP-or UDP/IP-based protocol stack, each of said base stations (101-104) being dedicated to communicate with a plurality of radio terminals having access to said Radio Access Network over at least two different types of radio channels, said addressing method being **characterized in that** it comprises the step of implicitly and univocally determining the type of radio channel over which said base station (101-104) communicates with one of said radio terminals by a port number mentioned in each TCP or UDP data packet exchanged over said Radio Access Network and belonging to a communication with said radio terminal.

2. Addressing method according to Claim 1, **characterized in** each of said radio channel types is associated to at least one of said port numbers available at a base station (101-104) or at a base station controller (111) of said Radio Access Network,

3. Addressing method according to claim 1, **characterized in that** said IP-based protocol stack used in said IP-based Radio Access Network comprises UDP/IP combination, the UDP destination port number in said UPD header determining univocally said radio channel type.

4. Addressing method according to claim 1, **characterized in that** said IP-based protocol stack used in said IP-based Radio Access Network comprises UDP/IP combination, the UDP source port number in said UPD header determining univocally said radio channel type.

5. Addressing method according to claim 1, **characterized in that** the parameters of a communication with said radio terminal are defined by an IP address, a UDP destination port number, and a communication identifier contained in the different layers of said IP-based protocol stack used in said Radio Access Network

6. Base station (101-104) to be part of an IP-based Radio Access Network and communicating with other elements of said Radio Access Network by using an IP-based protocol stack, said base station (101-104) being dedicated to communicate with a plurality of radio terminals having access to said Radio Access Network over at least two different types of radio channels, said base station (101-104) being **characterized in that** it comprises a channel type selector to determine the channel type on which data coming from said Radio Access Network has to be transmitted to one of said radio terminals, said channel selector determining univocally said channel type by means of a port number mentioned in the TCP or UDP header of a data packet received from said Radio Access Network and belonging to a communication with said radio terminal.

7. Base station (101-104) according to claim 6, **characterized in that** said channel selector further selects a port number to be used in said IP-based protocol stack to forward data to said Radio Access Network depending on the channel type on which said data are received from one of said radio terminals.

8. Radio Network Controller (111) to be part of an IP-based Radio Access Network and communicating with other elements of said Radio Access Network by using an IP-based protocol stack, said Radio Network Controller (101) comprising means to receive from outside of the Radio Access Network data belonging to a communication with a radio terminal, said radio terminals being accessible over at least two different types of radio channels, said Radio Network Controller being **characterized in that** it comprises a channel type selector to determine, according to said data belonging to said communication, the channel type on which a part of said data belonging to said communication has to be transmitted to said radio terminal, said channel selector determining univocally, according to said channel type, a port number to be mentioned in each TCP or UDP data packet exchanged over said Radio Access Network and belonging to said communication with said radio terminal.

## Patentansprüche

1. Adressierungsverfahren für ein IP-basiertes Funkzugriffsnetz, wobei das Funkzugriffsnetz eine Vielzahl von Basisstationen (101 - 104) und mindestens einen Basisstationscontroller (111) umfaßt, die alle miteinander unter Verwendung eines TCP/IP- oder UDP/IP-basierten Protokollstacks kommunizieren, wobei jede der Basisstationen (101 - 104) vorgesehen ist, um mit einer Vielzahl von Funkterminals zu kommunizieren, die Zugriff auf das Funkzugriffsnetz über mindestens zwei verschiedene Arten von Funkkanälen haben, wobei das Adressierungsverfahren **dadurch gekennzeichnet ist, daß** es den Schritt des impliziten und eindeutigen Bestimmens der Art des Funkkanals beinhaltet, über welchen die Basisstation (101 - 104) mit einem der Funkterminals mit einer Portnummer kommuniziert, die in jedem TCP- oder UDP-Paket erwähnt ist, das über das Funkzugriffsnetz vermittelt wurde, und zu einer Kommunikation mit dem Funkterminal gehört.

2. Adressierungsverfahren nach Anspruch 1, **dadurch gekennzeichnet, daß** jede der Funkkanalarten mit mindestens einer der Portnummern verbunden ist, die an einer Basisstation (101 - 104) oder an einem Basisstationscontroller (111) des Funkzugriffsnetzes verfügbar sind.

3. Adressierungsverfahren nach Anspruch 1, **dadurch gekennzeichnet, daß** der IP-basierte Protokollstack, der in dem IP-basierten Funkzugriffsnetz verwendet wird, eine UDP/IP-Kombination umfaßt, wobei die UDP Ziel-Port-Nummer in dem UPD-Header eindeutig die Funkkanalart bestimmt.

4. Adressierungsverfahren nach Anspruch 1, **dadurch gekennzeichnet, daß** der IP-basierte Protokollstack, der in dem IP-basierten Funkzugriffsnetz verwendet wird, eine UDP/IP-Kombination umfaßt, wobei die UDP Source-Port-Nummer in dem UPD-Header eindeutig die Funkkanalart bestimmt.

5. Adressierungsverfahren nach Anspruch 1, **dadurch gekennzeichnet, daß** die Parameter einer Verbindung mit dem Funkterminal durch eine IP-Adresse, eine UDP Ziel-Port-Nummer und einen Kommunikationsidentifikator definiert werden, die in den verschiedenen Schichten des IP-basierten Protokollstacks enthalten sind, die im Funkzugriffsnetz verwendet werden.

6. Basisstation (101 - 104) als Teil eines IP-basierten Funkzugriffsnetzes und kommunizierend mit anderen Elementen des Funkzugriffsnetzes unter Verwendung eines IP-basierten Protokollstacks, wobei die Basisstation (101 - 104), die vorgesehen ist, um mit einer Vielzahl von Funkterminals zu kommunizieren, den Zugriff auf das Funkzugriffsnetz über mindestens zwei verschiedene Arten von Funkkanälen hat, wobei die Basisstation (101 - 104) **dadurch gekennzeichnet ist, daß** sie einen Kanalartselektor umfaßt, um die Kanalart zu bestimmen, auf welcher Daten, die vom Funkzugriffsnetz kommen, an eines der Funkterminals zu senden sind, wobei der Kanalselektor eindeutig die Kanalart mittels einer Portnummer bestimmt, die in dem TCP- oder UDP-Header eines Datenpakets erwähnt ist, das von dem Funkzugriffsnetz empfangen wurde und zu einer Verbindung mit dem Funkterminal gehört.

7. Basisstation (101 - 104) nach Anspruch 6, **dadurch gekennzeichnet, daß** der Kanalselektor überdies eine Portnummer auswählt, die in einem IP-basierten Protokollstack zu verwenden ist, um Daten an das Funkzugriffsnetz zu übertragen in Abhängigkeit von der Kanalart, auf welcher die Daten von einem der Funkterminals empfangen wurden.

8. Funknetzsteuerung (111) als Teil eines IP-basierten Funkzugriffsnetzes und kommunizierend mit anderen Elementen des Funkzugriffsnetzes unter Verwendung eines IP-basierten Protokollstacks, wobei die Funknetzsteuerung (111) Vorrichtungen umfaßt, um von außerhalb des Funkzugriffsnetzes Daten zu empfangen, die zu einer Verbindung mit einem Funkterminal gehören, wobei die Funkterminals über mindestens zwei verschiedene Arten von Funkkanälen erreichbar sind, wobei die Funknetzsteuerung **dadurch gekennzeichnet ist, daß** sie einen Kanalartselektor umfaßt, um entsprechend den Daten, die zu der Verbindung gehören, die Kanalart zu bestimmen, auf welcher ein Teil der Daten, die zu der Verbindung gehören, an das Funkterminal zu senden sind, wobei der Kanalselektor entsprechend der Kanalart eindeutig eine Portnummer bestimmt, die in jedem TCP- oder UDP-Datenpaket anzugeben ist, das über das Funkzugriffsnetz vermittelt wird und zu der Verbindung mit dem Funkterminal gehört.

## Revendications

1. Procédé d'adressage à utiliser dans un réseau IP d'accès radio, ledit réseau d'accès radio comprenant une pluralité de stations de base (101 à 104) et au moins un contrôleur de station de base (111) communiquant toutes les unes avec les autres en utilisant une pile de protocole TCP/IP ou UDP/IP, chacune desdites stations de base (101 à 104) étant dédiée pour communiquer avec une pluralité de terminaux radioélectriques ayant accès audit réseau d'accès radio sur au moins deux types différents de canaux radio, ledit procédé d'adressage étant **caractérisé en ce qu'**il comprend l'étape consistant à déterminer de manière implicite et univoque le type de canal radio sur lequel ladite station de base (101 à 104) communique avec l'un desdits terminaux radio par un numéro de port mentionné dans chaque paquet de données TCP ou UDP échangé sur ledit réseau d'accès radio et appartenant à une communication avec ledit terminal radio.

2. Procédé d'adressage selon la revendication 1, **caractérisé en ce que** chacun desdits types de canal radio est associé à au moins l'un parmi lesdits éléments de port disponibles au niveau d'une station de base (101 à 104) ou au niveau d'un contrôleur de station de base (111) dudit réseau d'accès radio.

3. Procédé d'adressage selon la revendication 1, **caractérisé en ce que** ladite pile de protocole IP utilisée dans ledit réseau IP d'accès radio comprend une combinaison UDP/IP, le numéro de port réservé UDP dans ledit en-tête UDP déterminant de manière univoque ledit type de canal radio.

4. Procédé d'adressage selon la revendication 1, **caractérisé en ce que** ladite pile de protocole IP utilisée dans ledit réseau IP d'accès radio comprend une combinaison UDP/IP, le numéro de port source UDP dans ledit en-tête UDP déterminant de manière univoque ledit type de canal radio.

5. Procédé d'adressage selon la revendication 1, **caractérisé en ce que** les paramètres d'une communication avec ledit terminal radioélectrique sont définis par une adresse IP, un numéro de port réservé UDP, et un identifiant de communication contenu dans les différentes couches de ladite pile de protocole IP utilisée dans ledit réseau d'accès radio.

6. Station de base (101 à 104) destinée à faire partie d'un réseau IP d'accès radio et à communiquer avec d'autres éléments dudit réseau d'accès radio en utilisant une pile de protocole IP, ladite station de base (101 à 104) étant dédiée pour communiquer avec une pluralité de terminaux radio ayant accès audit réseau d'accès radio sur au moins deux types différents de canaux radio, ladite station de base (101 à 104) étant **caractérisée en ce qu'**elle comprend un sélecteur de type de canal afin de déterminer le type de canal sur lequel les données provenant dudit réseau d'accès radio à transmettre à l'un parmi lesdits terminaux radioélectriques, ledit sélecteur de canal déterminant de manière univoque ledit type de canal au moyen d'un numéro de port mentionné dans l'en-tête TCP ou UDP d'un paquet de données reçues en provenance dudit réseau d'accès radio et appartenant à une communication avec ledit terminal radio.

7. Station de base (101 à 104) selon la revendication 6, **caractérisée en ce que** ledit sélecteur de canal sélectionne en outre un numéro de port à utiliser dans ladite pile de protocole IP afin de réacheminer les données vers ledit réseau d'accès radio en fonction du type de canal sur lequel lesdites données sont reçues depuis l'un parmi lesdits terminaux radio.

8. Contrôleur de réseau radio (111) destiné à faire partie d'un réseau IP d'accès radio et à communiquer avec d'autres éléments dudit réseau d'accès radio en utilisant une pile de protocole IP, ledit contrôleur de réseau radio (111) comprenant un moyen destiné à recevoir depuis l'extérieur du réseau d'accès radio des données appartenant à une communication avec un terminal radio, lesdits terminaux radio étant accessibles sur au moins deux types différents de canaux radio, ledit contrôleur de réseau radio étant **caractérisé en ce qu'**il comprend un sélecteur de type de canal pour déterminer, selon lesdites données appartenant à ladite communication, le type de canal sur lequel une partie desdites données appartenant à ladite communication doit être transmise vers ledit terminal radio, ledit canal déterminant de manière univoque le sélecteur, selon ledit type de canal, un numéro de port à mentionner dans chaque paquet de données TCP ou UDP échangé sur ledit réseau d'accès radio et appartenant à ladite communication avec ledit terminal radio.
